# EUROPEAN PATENT SPECIFICATION

(11) **EP 1 714 942 B1**
(45) Date of publication and mention of the grant of the patent: **11.04.2018**
(21) Application number: 05291723.4
(22) Date of filing: 12.08.2005
(51) Int. Cl.: C01B 32/90, C01B 32/921, C01B 32/949

(54) **Ceramic powder, methods to prepare the ceramic powder and a method to prepare a ceramic**
Keramikpulver, Verfahren zur Herstellung von Keramikpulver und Verfahren zur Herstellung von Keramik
Poudre en céramique, Procédé de fabrication d'un poudre en céramique et Procédé de fabrication d'une céramique

(30) Priority: 19.04.2005 KR 2005032533
(43) Date of publication of application: 25.10.2006
(73) Proprietor: Seoul National University R&DB Foundation, Seoul (KR)
(72) Inventor: Kang, Shinhoo, Kangnam-gu Seoul, 135-876 (KR)
(74) Representative: Novagraaf Technologies

(56) References cited:
- US-A- 5 166 103
- US-A- 5 380 688
- US-A1- 2005 047 950
- US-B1- 6 793 875
- PARK D-S ET AL: "EFFECT OF CARBIDES ON THE MICROSTRUCTURE AND PROPERTIES OF TI(C,N)-BASED CERAMICS" JOURNAL OF THE AMERICAN CERAMIC SOCIETY, BLACKWELL PUBLISHING, MALDEN, MA, US, vol. 82, no. 11, November 1999 (1999-11), pages 3150-3154, XP000862733 ISSN: 0002-7820
- PATENT ABSTRACTS OF JAPAN vol. 008, no. 056 (C-214), 14 March 1984 (1984-03-14) -& JP 58 213619 A (MITSUBISHI KINZOKU KK; others: 01), 12 December 1983 (1983-12-12)
- PARK S ET AL: "Toughened ultra-fine (Ti,W)(CN)-Ni cermets" SCRIPTA MATERIALIA, ELSEVIER, AMSTERDAM, NL, vol. 52, no. 2, January 2005 (2005-01), pages 129-133, XP004610857 ISSN: 1359-6462
- KIM Y K ET AL: "Mechanochemical synthesis of nanocomposite powder for ultrafine (Ti, Mo)C-Ni cermet without core-rim structure" INTERNATIONAL JOURNAL OF REFRACTORY METALS AND HARD MATERIALS, ELSEVIER PUBLISHERS, BARKING, GB, vol. 22, no. 4-5, July 2004 (2004-07), pages 193-196, XP004627898 ISSN: 0263-4368
- YANG M C ET AL: "Synthesis of WC-TiC35-Co10 nanocomposite powder by a novel method" INTERNATIONAL JOURNAL OF REFRACTORY METALS AND HARD MATERIALS, ELSEVIER PUBLISHERS, BARKING, GB, vol. 22, no. 1, January 2004 (2004-01), pages 1-7, XP004491857 ISSN: 0263-4368
- JEON E T ET AL: "Microstructure and tribo-mechanical properties of ultrafine Ti(CN) cermets" INTERNATIONAL JOURNAL OF REFRACTORY METALS AND HARD MATERIALS, ELSEVIER PUBLISHERS, BARKING, GB, vol. 20, no. 3, May 2002 (2002-05), pages 207-211, XP004382012 ISSN: 0263-4368
- PARK ET AL: "Synthesis of (Ti,M1,M2)(CN)-Ni nanocrystalline powders" INTERNATIONAL JOURNAL OF REFRACTORY METALS AND HARD MATERIALS, ELSEVIER PUBLISHERS, BARKING, GB, vol. 24, no. 1-2, January 2006 (2006-01), pages 115-121, XP005171522 ISSN: 0263-4368
- LENGAUER W ET AL: "Functionally graded hardmetals" JOURNAL OF ALLOYS AND COMPOUNDS, ELSEVIER SEQUOIA, LAUSANNE, CH, vol. 338, no. 1-2, 16 May 2002 (2002-05-16), pages 194-212, XP004349178 ISSN: 0925-8388
- SODERBERG S ET AL: "Advances in coating technology for metal cutting tools" METAL POWDER REPORT, MPR PUBLISHING SERVICES, SHREWSBURY, GB, vol. 56, no. 4, April 2001 (2001-04), pages 24-30, XP004348499 ISSN: 0026-0657

## Description

### BACKGROUND OF THE INVENTION

### Field of the Invention

The present invention relates to a **ceramic** powder, a method for preparing the **ceramic** powder, and a method for preparing the ceramic, which are adapted to materials for high-speed cutting tools and die used in a machine industry such as manufacture of machine, an automotive industry and so on, in order to improve general mechanical properties, particularly toughness and hardness for the materials.

### Description of the Related Art

In this context, "nano size" means the size of 100mn or less as is known well.

In this context, the capital letter of W, M1, M2... and the small letter of w, m₁, m₂..are used simultaneously. It is intended that the small letter of w, m₁, m₂..are meant to show small amount of metal relatively in comparison with the capital letter W, M1, M2···.

For major cutting tools or wear-resistance tools utilized in metal cutting required for a machine industry, WC based hard alloys, various TiC or Ti(CN) based cermet alloys and other ceramic or high-speed steels, etc. are used.

A cermet means ceramic metal composite sinter. Usually, the cermet includes hard phase of TiC and Ti(CN) and binding phase of metal such as Ni, Co, Fe, etc., and an additive such as carbide, nitride, carbo-nitride, etc. of IV, V and VI Group metals of the periodic table.

That is, uaually, a cermet is prepared by mixing hard ceramic powders of WC, NbC, TaC, Mo₂C, etc., in addition to TiC or Ti(CN), with metal powders of Co, Ni, etc., which is matrix phase for binding the ceramic powders, and sintering the mixture under a vacuum or hydrogen atmosphere.

Titanium carbide and titanium carbo-nitride are excellent hard materials with broad applications. As titanium carbide has a high hardness (Vicker's = 3200kg/mm²), high melting points (3260°C), high chemical and thermal stability, high wear-resistance and high solvency for other carbides, it has been used for high-speed cutting tools in substitution of WC-Co alloy. However, in the TiC-Ni cermet system, coarsening of TiC grains results in poor mechanical properties. Further, in case of preparing a cermet using TiC, upon sintered, binding phase metal of Ni is used as a liquid metal, so that a wetting angle comes to be large in comparison with that of a combination of WC-Co and rapid grain growth of TiC comes to occur, which cause the problem of reducing a toughness of the cermet.

Nevertheless, in 1956, Ford Motor Company mass-fabricated TiC-Mo₂C-Ni cermet. Although the toughness of the cermet was not largely improved, the cermet had been used in semi-finishing and finishing as material for high hardness tools for precise machining operations.

In the 1960's and 1970's, to improve the toughness that was a great weakness of the TiC-Ni cermet system, there had been an attempt to add various kinds of elements thereto, which, however, could not have attained tangible results.

On the way, in the 1970's, performed was adding TiN to TiC in order to form Ti(C,N) of a more stable thermodynamic phase, which could improve toughness in a certain degree.

That is, since Ti(C,N) had a micro fine structure in comparison with TiC, toughness thereof had been improved, in addition to a chemical stability and a mechanical shock resistance.

Meanwhile, to improve toughness, various additive carbides such as WC, Mo₂C, TaC, NbC, etc. have been used, and even now products in the form of Ti(C,N)-M1C-M2C-···-Ni/Co are commercializing.

When adapting the additive carbides for the improvement of toughness, a general microstructure of TiC based or Ti(C,N) based cermet sinter is observed as a core/rim structure of hard phase, around which Ni, Co, etc. of binding phase surround.

The core of the structure is undissolved TiC or Ti(C,N) in liquefied metal binder (Ni, Co and so on) during sintering, the core having a structure with high hardness.

On the contrary, a structure of rim surrounding the core is a solid-solution of TiC or Ti(CN), which is the component of the core, and the carbides, which are the additives [the solid-solution is expressed as (Ti,M1,M2···)(C,N)].

The structure of rim has high toughness rather than hardness. Therefore, in order to resolve the fatal weakness of toughness that simple cermet such as TiC or Ti(C,N)-Ni has, the structure of rim has been provided in the cermet.

However, the cermet having such core/rim structure still has a problem in that the cermet has toughness lower than that of WC-Co hard alloy, so that the cermet cannot yet replace WC-Co completely.

Further, the strain developed at the interface between core and rim phases exerts a negative effect on the properties, facilitating crack propagation through the interface during machining. Thus, many efforts have been performed steadily by Japanese tool companies such as Sumitomo, Kyocera, etc. and researchers of EU and NATO to produce a homogeneous solid-solution of single phase without core/rim structure. However, many industrial attempts targeting this homogeneity have failed to provide it.

In particular, according to the prior art, it was impossible to attain a homongeneous solid-solution phase without core/rim structure in the reducing and carburiznig condition of low temperature of 1300 °C or less and relatively short time because the solid-solution phase is formed during a sintering process and an amount of the solid-solution phase formed depends on a temperature and time of the sintering process, which require high temperature of 1400 °C or more and relatively long time. US 5,380,688 and US 5,166,103 disclose solid solution carbide powders and methods for making the same.

### SUMMARY OF THE INVENTION

Accordingly, the present invention has been made to solve the above-mentioned problems occurring in the prior art.

The object of the present invention is to provide a **ceramic,** a method for preparing the **ceramic** powder, and a method for preparing the ceramic, wherein the problem of low toughness due to high hardness that conventional cermets (especially TiC or Ti(CN) based cermet) have is resolved because a complete solid-solution phase without core/rim structure can be obtained as a microstructure, and wherein further increased the hardness as well as the toughness, thereby substantially and considerably increasing general mechanical properties of materials using the ceramic or the cermet and thus substituting WC-Co hard material and allowing manufacturing of cutting tools with high hardness and toughness, and wherein the complete solid-solution phase without core/rim structure can be obtained even in the reducing and carburizing condition of low temperature of 1300 °C or less and relatively short time, thereby increasing an efficiency of the overall process.

In order to achieve the object, according to the present invention, there is provided a ceramic powder comprising a carbide or a carbo-nitride of Ti and at least one further element of metal selected from IV, V and VI Group metals of the periodic table, and having nano-sized crystallites of 100 nm or less and a homogenous microstructure consisting of a single complete solid-solution phase, wherein the amount of the further element besides Ti in the form of its carbide or carbonitride is 5∼90wt% relative to total weight of the powder.

In the **ceramic** powder according to the present invention, the amount of W is 10∼90wt%.

In the **ceramic** powder according to the present invention, the amount of W is 10∼80wt%, and the amount of Mo, Nb and/or Ta is below 25wt% if added.

In the **ceramic** powder according to the present invention, the amount of W is 10∼80wt%, and the amount of Mo, Nb and/or Ta is below 10wt% if added.

In the **ceramic** powder according to the present invention, the amount of W is 30∼90wt%, and the amount of Mo, Nb and/or Ta is below 10wt% if added.

Further, according to the present invention, there is provided a ceramic being a sinter of the **ceramic** powder.

In the ceramic according to the present invention, the ceramic further comprises one or more reinforced coating layers of TiC-Me, Ti(CN)-Me, (Ti, M1, M2..)C-Me or (Ti, M1, M2..)(CN)-Me (Me is a binding phase, which is one or more selected from the group consisting of Ni, Co, Fe) on the surface of the ceramic, the reinforced coating layer being formed with CVD or PVD method after sintering the **ceramic** powder.

Further, here is **disclosed** a cermet powder being an agglomerate comprising (i) a carbide, a carbo-nitride or mixture thereof of at least one element of metals selected from IV, V and VI Group metals of periodic table, and (ii) at least one element of metals selected from Ni, Co and Fe, the agglormerate having a microstructure of a complete solid-solution phase.

**The** cermet powder is an agglomerate comprising (i) a carbide, a carbo-nitride or mixture thereof of at least two elements of metals selected, including Ti, from IV, V and VI Group metals of periodic table, and (ii) at least one element of metals selected from Ni, Co and Fe, the agglomerate having a microstructure of a complete solid-solution phase.

In the cermet powder, the agglomerate has nano-sized crystallites of 100nm or less.

In the cermet powder, the amount of W is 10∼85wt%, and the amount of Mo, Nb and/or Ta is below 10wt% if added, and the amount of binding phase of Ni, Co and/or Fe is below 30wt%.

In the cermet powder, the amount of W is 10∼60wt%, and the amount of Mo, Nb and/or Ta is below 10wt% if added, and the amount of binding phase of Ni, Co and/or Fe is below 30wt%.

Further, there is **disclosed** a cermet being a sinter of the cermet powder.

**The** cermet is a sinter of the mixture of the cermet powder of TiC-Me or Ti(CN)-Me having nano-sized crystallites of 100nm or less (Me is a binding phase, which is one or more selected from the group consisting of Ni, Co, Fe) and the cermet powder of one or more selected from the group consisting of WC-Me, Mo₂C-Me, TaC-Me, NbC-Me, ZrC-Me and/or HfC-Me, all of which have nano-sized crystallites of 100nm or less (Me is a binding phase, which is one or more selected from the group consisting of Ni, Co, Fe), and the sinter has core of TiC or Ti(CN).

**The** cermet is a sinter of the mixture of the cermet powder of TiC-Me or Ti(CN)-Me having nano-sized crystallites of 100nm or less (Me is a binding phase, which is one or more selected from the group consisting of Ni, Co, Fe) and the cermet powder which is an agglomerate comprising (i) a carbide, a carbo-nitride or mixture thereof of at least two elements of metals selected, including Ti, from IV, V and VI Group metals of periodic table, and (ii) at least one element of metals selected from Ni, Co and Fe, the agglomerate having complete solid-solution and nano-sized crystallites of 100nm or less.

**The** cermet further comprises a hard phase of TiC, Ti(CN), (Ti,M₁,M₂..)C or (Ti,M₁,M₂..)(CN) only on the surface of the cermet, the hard phase being formed with sintering the cermet powder under the control of amount of nitrogen introduced to a furnace and/or time of introducing nitrogen to a furnace during the sintering.

**The** cermet further comprises one or more reinforced coating layers of TiC, TiN, Ti(CN), TiAIN or TiAlCrN on the surface of the cermet, the reinforced coating layers being formed with CVD or PVD method after sintering the cermet powder.

Further, according to the present invention, there is provided a method for preparing a **ceramic** powder, comprising the steps of: mixing oxides, hydroxides, carbonates or hydrates having nano size of at least two elements of metals selected, including Ti, from IV, V and VI Group metals of periodic table with carbon powder or carbon source material, in a predetermined composition (S1-1); and reducing and carburizing the mixture (S2).

In the method according to the present invention, the step (S1-1) further comprises grinding the mixture.

Further, according to the present invention, there is provided a method for preparing a **ceramic** powder, comprising the steps of: mixing oxides, hydroxides, carbonates or hydrates having micron size of at least two elements of metals selected, including Ti, from IV, V and VI Group metals of periodic table with carbon powders or carbon source material, in a predetermined composition, and grinding the mixture to nano size or amorphous state (S1-2); and reducing and carburizing the mixture (S2).

Further, according to the present invention, there is provided a method for preparing a ceramic, the method comprising the step of: sintering the **ceramic** powder.

In the method according to the present invention, the method further comprises the process of forming one or more reinforced coating layers of TiC-Me, Ti(CN)-Me, (Ti, M1, M2..)C-Me or (Ti, M1, M2..)(CN)-Me (Me is a binding phase, which is one or more selected from the group consisting of Ni, Co, Fe) on the surface of the ceramic, the reinforced coating layers being formed with CVD or PVD method after sintering the **ceramic** powder.

Further, there is **disclosed** a method for preparing cermet powder, the method comprising the steps of: mixing (i) oxides, hydroxides, carbonates or hydrates having nano size of at least one element of metals selected from Ni, Co and Fe, (ii) oxides, hydroxides, carbonates or hydrates having nano size of at least one element of metals selected from IV, V and VI Group metals of periodic table, and (iii) carbon powders or carbon source material, in a predetermined composition (S1-3); and reducing and carburizing the mixture of (i), (ii) and (iii) (S2).

In the method, the step of (S1-3) comprises mixing (i) oxides, hydroxides, carbonates or hydrates having nano size of at least one element of metals selected from Ni, Co and Fe, (ii) oxides, hydroxides, carbonates or hydrates having nano size of at least two elements of metals selected, including Ti, from IV, V and VI Group metals of periodic table, and (iii) carbon powders or carbon source material, in a predetermined composition.

In the method, the step (S1-3) further comprises grinding the mixture of (i), (ii) and (iii).

Further, there is **disclosed** a method for preparing cermet powder, the method comprising the steps of: mixing (i) oxides, hydroxides, carbonates or hydrates having micron size of at least one element of metals selected from Ni, Co and Fe, (ii) oxides, hydroxides, carbonates or hydrates having micron size of at least one element of metals selected from IV, V and VI Group metals of periodic table, and (iii) carbon powders or carbon source material, in a predetermined composition, and grinding the mixture of (i), (ii) and (iii) to nano size or amorphous state (SI-4); and reducing and carburizing the mixture of (i), (ii) and (iii) (S2).

In the method, the step of (SI-4) comprises mixing (i) oxides, hydroxides, carbonates or hydrates having micron size of at least one element of metals selected from Ni, Co and Fe, (ii) oxides, hydroxides, carbonates or hydrates having micron size of at least two elements of metals selected, including Ti, from IV, V and VI Group metals of periodic table, and (iii) carbon powders or carbon source material, in a predetermined composition, and grinding the mixture of (i), (ii) and (iii) to nano size or amorphous state.

In the methods, the step (S2) further comprises nitriding the mixture in addition to the reducing and carburizing.

In the methods, the step (S2) is preformed so that the reducing and carburizing are conducted at a temperature of 1000 to 1300 °C for 3 hours or less under a vacuum or hydrogen, CH₄, CO/CO₂ atmosphere, and then the nitriding is conducted under a nitrogen atmosphere.

Further, there is **disclosed** a method for preparing a cermet, the method comprising the step of: sintering the cermet powder.

In the method, sintered is the mixture of the cermet powder of TiC-Me or Ti(CN)-Me having nano-sized crystallites of 100nm or less (Me is a binding phase, which is one or more selected from the group consisting of Ni, Co, Fe) and the cermet powder of one or more selected from the group consisting of WC-Me, Mo₂C-Me, TaC-Me, NbC-Me, ZrC-Me and/or HfC-Me, all of which have nano-sized crystallites of 100nm or less (Me is a binding phase, which is one or more selected from the group consisting of Ni, Co, Fe).

In the method, sintered is the mixture of the cermet powder of TiC-Me or Ti(CN)-Me having nano-sized crystallites of 100nm or less (Me is a binding phase, which is one or more selected from the group consisting of Ni, Co, Fe) and the cermet powder which is an agglomerate comprising (i) a carbide, a carbo-nitride or mixture thereof of at least two elements of metals selected, including Ti, from IV, V and VI Group metals of periodic table, and (ii) at least one element of metals selected from Ni, Co and Fe, the agglomerate having a complete solid-solution and nano-sized crystallites of 100nm or less.

In the method, the method further comprises the process of forming a hard phase of TiC, Ti(CN), (Ti,M₁,M₂..)C or (Ti,M₁,M₂..)(CN) only on the surface of the cermet with sintering the cermet powder under the control of amount of nitrogen introduced to a furnace and/or time of introducing nitrogen to a furnace during the sintering.

In the method, the method further comprises the process of forming one or more reinforced coating layers of TiC, TiN, Ti(CN), TiAlN or TiAlCrN on the surface of the cermet with CVD or PVD method after sintering the cermet powder.

### BRIEF DESCRIPTION OF THE DRAWINGS

FIG. 1a shows a result of XRD phase analysis of (Ti,W)C **ceramic** powders (containing 15wt% of WC) according to the present invention;
FIG. 1b shows a result of XRD phase analysis of (Ti,W)C-Ni cermet powders (containing 30wt% of WC);
FIG. 1c shows a result of XRD phase analysis of (Ti,W)(C,N)-Ni cermet powders (containing 30wt% of WC and C/N=3:1);
FIG. 2a is a photograph of SEM showing a shape of (Ti,W)C-Ni cermet powders (containing 15wt% of WC);
FIG. 2b is a photograph of TEM showing a shape of (Ti,W)C-Ni cermet powders (containing 15wt% of WC);
FIG. 2c is a photograph of SEM(1) and TEM(2) showing (Ti,W)C powders (containing 45wt% of WC) prepared by one example of the present invention.
FIG. 3a are photographs of FE-SEM showing respective sinters (1510°C and one hour) of (Ti,W)C-Ni cermet powders (containing 15wt% of WC) and (Ti,W)C-Ni cermet powders (containing 30wt% of WC);
FIG. 3b are photographs of FE-SEM showing respective sinters (1510°C and one hour) of (Ti,W)(C,N)-Ni cermet powders (containing 15wt% of WC and C/N=2:1) and (Ti,W)(C,N)-Ni cermet powders (containing 30wt% of WC and C/N=3:1);
FIG. 3c shows photographs of a microstructure of the sintered (Ti,W)C ceramics (1510°C and one hour) having the compositions equivalent to (1) TiC-45wt%WC, reduced and carburized at 1120°C for 1 hours; (2) TiC-77wt%WC, reduced and carburized at 1120°C for 1 hours; (3) TiC-58wt%WC, reduced and carburized at 1200°C for 1 hours; (4) TiC-77wt%WC, reduced and carburized at 1200°C for 1 hours;
FIG. 3d shows SEM/BSE images of cermets equivalent to the composition of TiC-xWC-10Co (in wt%); (a) x=85, (b) x=80, (c) x=70, (d) x=60, sintered at 1450°C for 1hour after carbothermal reduction at 1200°C for 1 hours: White and black phases are WC and Co, respectively while the phases in dark and light gray are (Ti,W)C;
FIG. 4a are photographs of FE-SEM showing the sintered specimen (1510°C and one hour) of (Ti,W)C-Ni cermet powder (containing 15wt% of WC) in nitrogen atmosphere;
FIG. 4b is a photograph of FE-SEM showing the surface of the sintered specimen (1200°C and one hour) of (Ti,W)C-Ni cermet powder (containing 30wt% of WC) in nitrogen atmosphere;
FIG.5 is a photograph of FE-SEM showing sinter (1510°C and one hour) of (Ti,W)C-Ni cermet powders (containing 15wt% of WC), the surface of which is coated with TiN hard coating layer by PVD;
FIG. 6a is photograph of FE-SEM showing sinter (1510°C and one hour) of cermet powders mixture of TiC-Ni and WC-Ni;
FIG. 6b is photograph of FE-SEM showing sinter (1510°C and one hour) of cermet powders mixture of Ti(CN)-Ni and MO₂C-Ni; and
FIG. 7 is photograph of FE-SEM showing sinter (1510 °C and one hour) of cermet powders mixture of (Ti,W)(CN)-Ni and Ti(CN)-Ni (30wt% Ti(CN)-Ni).

### DETAILED DESCRIPTION OF THE INVENTION

In the present invention, the "carbon source material" means material, which can provide carbon to other materials, besides carbon powders, and includes acetone, ethanol, butanol, carbon tetrachloride, carbon tetrabromide, bromotrichloromethane, etc.

In the present invention, a hydroxide, carbonate or hydrate as well as oxide of metal can be used in that the hydroxide, carbonate or hydrate can be reduced easily as oxide.

According to the present invention, the **ceramic** powder or the cermet powder, which is an agglomerate, including a binding metal in addition to the **ceramic** powder possibly provide a complete solid-solution phase without a core/rim structure, which substantially and considerably increase a toughness of the cermet prepared.

Further, preferably, the **ceramic** powder or the cermet powder have nano-sized crystallites with a size of 100nm or less. Of course, the crystallite size of the **ceramic** powder or the cermet powder can be analyzed differently according to the analyzing method such as scherrer method, linear fitting method and least-squares fitting method, etc. However, in any case of using the known analyzing methods, it is preferable that the crystallite size of the **ceramic** powder or the cermet powder prepared according to the present invention is not over the size of 100nm from the viewpoint of the efficiency of the method of the present invention.

According to the present invention, methods for preparing the **ceramic** powder and the cermet powder comprise two steps respectively:

The primary step for preparing **ceramic** powder includes mixing oxides, hydroxides, carbonates or hydrates having nano size of metals selected, including Ti, from IV, V, VI Group elements of periodic table with carbon powders or carbon source material, or mixing and grinding the mixture, if necessary (S1-1).

Otherwise, the primary step for preparing **ceramic** powder includes mixing oxides, hydroxides, carbonates or hydrates having micron size of metals selected, including Ti, from IV, V, VI Group elements of periodic table with carbon powders or carbon source material, and grinding the mixture to nano size or amorphous state (S1-2).

In order to prepare carbide or carbo-nitride **ceramic** powder having a complete solid-solution phase, in the primary step, it is possible that available oxides, hydroxides, carbonates or hydrates having nano size are used. However, it is preferable that the oxides, hydroxides, carbonates or hydrates having micron sizes are ground to nano sizes or amorphous state by using a high energy ball milling (e.g. using a planetary mill or attrition mill).

That is, for example, in order to prepare TiC based **ceramic** powder having nano size, performed may be mixing a nano-sized TiO₂, oxides having nano size of any one or at least two metals selected, excluding Ti, from IV, V and VI Group metals of periodic table (for example WO₃) with carbon powders. Then, if necessary, further performed may be grinding the mixed powders of nano-sized oxides and carbon powders.

However, if not used metal oxides that have already been nano-sized before mixing and/or grinding, performed is mixing the micron-sized TiO₂, oxides having micron size of any one or at least two metals selected, excluding Ti, from IV, V and VI Group metals of periodic table with carbon powders, and then performed is grinding the mixed powders to have nano size or amorphous state.

Herein, an amount of mixing can be properly selected according to a predetermined composition of **ceramic** powder. Further, upon the grinding, a high energy ball milling as described above may be used. In the present invention, even only through the ball milling process, nano-sized crystallites or amorphous state are easily prepared.

Meanwhile, the primary step for preparing cermet powder includes mixing oxides, hydroxides, carbonates or hydrates having nano size of metals selected, preferably including Ti, from IV, V, VI Group elements of periodic table and binder such as Ni, Co or Fe having nano size with carbon powders or carbon source material, or mixing and grinding the mixture, if necessary.

Otherwise, the primary step for preparing cermet powder includes oxides, hydroxides, carbonates or hydrates having micron size of metals selected, preferably including Ti, from IV, V, VI Group elements of periodic table and binder such as Ni, Co or Fe having micron size with carbon powders or carbon source material, and grinding the mixture to nano size or amorphous state.

That is, in order to prepare cermet powder according to the present invention, performed is mixing binder metal in nano size such as Ni, Co, Fe or Ni/Co, etc.; and oxides, hydroxides, carbonates or hydrates having nano size of metals selected, preferably including Ti, from IV, V, VI Group elements of periodic table; and carbon powders or carbon source material. If necessary, grinding is further conducted even in this case.

Herein, when used micron-sized binder metal such as Ni, Co, etc., performed is mixing oxides, hydroxides, carbonates or hydrates having nano or micron size of metal selected, preferably including Ti, from IV, V, VI Group elements of periodic table and carbon powders or carbon source material with the micron-sized binding metal, and then performed is grinding the mixture to nano size or amorphous state.

According to the primary step, a homogeneous microstructure consisting of a complete solid-solution phase without a core/rim structure can be attained. Further, a ceramic or cermet can be attained with a direct sintering of the **ceramic** powder or the cermet powder without additional mixing processes. Further, reducing and carburizing at low temperature of 1300 °C or less and relatively short time, which means the increment of the efficiency of the overall process, are possible as shown below by producing nanocrystalline or amorphous phase with full of defects, which increases the diffusion velocity and decreases the diffusion distance.

Next, the second step for preparing **ceramic** powder and cermet powder includes reducing and carburizing. If necessary, the second step includes reducing, carburizing and nitriding (S2).

That is, after the mixed and/or ground mixture are reduced under, for example, a vacuum, hydrogen, CO/CO₂ or CH₄ atmosphere, and then carburized (carburized and nitrided), **ceramic** powder having nano crystallite and consisting of complete solid-solution phase are prepared. Also, in case of cermet powder, an agglormerate having nano crystallite and complete solid-solution is prepared.

Further, for example, upon the formation of carbo-nitride, reducing and carburizing are conducted through an annealing for 3 hours or less at a temperature of 1000 to 1300°C (it should be noted that such a low temperature and relatively short time can be realized) under a vacuum or hydrogen atmosphere, and then nitriding is conducted, so that minimum quantity of oxygen and proper quantity of carbon and nitrogen are secured to prevent the formation of voids and to improve the mechanical properties of the cermet.

The content of oxygen is an important factor in the carbide or cabo-nitride nano powders prepared by above process. Generally, if the content of oxygen is increased, it is subject to form voids, so that it is necessary to secure minimum content of oxygen and a proper quantity of carbon in conformity with the oxygen content.

Accordingly, the mixed and/or ground powders are reduced at 1000 to 1300°C under a vacuum or hydrogen atmosphere for 3 hours or less and are then carburized (carburized and nitrided), so that as shown in the following example, even nano powders, particularly in case of Ti(CN) based nano crystallites, have the oxygen content similar to that of normal micron-sized powders .

Under the processing condition, an amount of nitrogen can be freely selected according to a process temperature, a partial pressure of nitrogen upon composing of powders, and an amount of carbon added to the powders. Particularly, as a stable composition, C/N (mol ratio) is preferably 3/7, 5/5 or 7/3, more preferably 7/3.

Then, the **ceramic** powders or cermet powders prepared are sintered with a temperature and time for sintering the **ceramic** powders or cermet powders under a atmosphere such as vacuum atmosphere so that ceramic or cermet having complete solid-solution phase is attained.

According to the method of the present invention, there can be prepared complete **ceramic** powders having a type of (Ti,M1,M2···)C, (Ti,M1,M2···)(C,N), (Ti,M1,M2···)C-Ni and (Ti,M1,M2···)(C,N)-Ni···. Further, the ceramic using the **ceramic** powder, the cermet powder including said **ceramic** powder and a cermet using the cermet powder can be provided.

Especially, TiC or Ti(CN) based **ceramic** powder prepared according to the present invention become to have nano-sized crystallites of 100nm or less. Further, ceramic and cermet prepared become an agglomerate having nano-sized crystallites of 100nm or less.

The size of the powder and agglomerate can be regulated in various sizes. That is, by regulating milling condition such as time, speed, temperature, etc., powders composition condition such as time, temperature, etc., the size of the powders and agglomerates can be regulated. Further, the agglomerates can be prepared to have a submicron size (more than 100nm, and less than 1 *µ*m), and a micron size (a few *µ*m).

However, since the manufacturing equipment and process of the cermet of prior art are optimized for powders having a size more than submicron, it is proper to prepare an agglomerates of 200nm or less according to the present invention in light of easy approach and economical efficiency.

All metals that are solutes in the **ceramic** powders of the present invention can form a complete solid-solution phase within the range of solid solubility of the respective metals. This is also the case for the cermet powders.

Ti is included in the complete **ceramic** powders of the present invention, **and** the amount of the other element besides the Ti is 5∼90wt%.

Particularly, in the complete **ceramic** powders of the present invention, for example, if W is included therein, the amount of W can be 10∼90wt%. Further, in case that W is included therein with other Mo, Nb, Ta, the amount of Mo, Nb and/or Ta can be 0∼25wt%, preferably 0∼10wt% and the amount of W can be preferably 30∼90wt%. Also, in the case of the ceremet powders, the amount of Mo, Nb and/or Ta can be 0∼10wt% and the amount of W can be 10∼85wt%, preferably 10∼60wt% and the amount of the binding phase of Ni, Co and/or Fe can be 0∼30wt%.

The scope of the present invention does not include the sintered body wherein, for example, (Ti,W)C are present with WC in the microstructure of the sintered body due to the usage of much amount of WC(with the weight ratio of WC/TiC>4). For further improving the hardness of a cermet or the ceramic having a high toughness prepared according to the present invention, two methods wherein one or more reinforced layers or coating layers is formed on the surface of the cermet or ceramic may be used during the sintering according to the present invention.

One is a method to form a hard layer on a surface of the cermet or ceramic and the other is a method to form a high hard coating on a surface of the cermet or ceramic.

For example, for forming the hard layer on a surface of the cermet, the amount, preferably the amount of nitrogen introduced to a furnace and time for introducing nitrogen to a furnace are controlled during the sintering. That is, during the sintering of the cermet powders, 1∼100 torr of nitrogen is introduced to the furnace from before or during the sintering temperature, and the pressure can be made to be kept to a cooling process. To this end, solid-solution phase in the form of (Ti, W, M1, M2···)C/(Ti, W, M1, M2···)CN are induced to be decomposed to TiC, Ti(CN), (Ti,w, m₁, m₂..)C or (Ti, w, m₁,m₂..) (CN) of high hardness with/without WC, M1C, M2C, so that the high hard phase come to be formed as a hard layer only on the surface of the cermet and, therefore, the whole cermet sinter becomes to keep its high toughness, and have high hardness.

Further, for forming a high hard coating layer on a surface of the cermet, one or more high hard coating layers of TiC, TiN, Ti(CN), TiAlN, TiAlCrN, etc. are made to be formed on the surface of the cermet by using the CVD, PVD, etc. method after sintering the cermet powder. Further, if necessary for controlling a lattice mismatch (decreasing the lattice mismatch), after the size of the solid-solution phase on the surface of the cermet is made to be lager (the cermet becomes to have extended size of solid-solution phase) or the binding phase of metal is made to be rich near on the surface of the cermet by using the atmosphere of vacuum or argon, nitrogen, etc. during the sintering of the cermet powders, then the high hard coating layer are made to be formed.

Furthermore, for forming a reinforced (especially in toughness) coating layer on a surface of the ceramic, one or more reinforced coating layers of TiC-Me, Ti(CN)-Me, (Ti, M1, M2..)C-Me or (Ti, M1, M2..)(CN)-Me (Me is a binding phase, which is one or more selected from the group consisting of Ni, Co, Fe) are made to be formed on the surface of the ceramic with CVD or PVD method after sintering the **ceramic** powder.

Further to using the above-mentioned methods or without using the methods, ultra fine or nano size cermet of high toughness having high hardness wholly can be prepared by the following two methods.

One is a method that nano crystallite powder of TiC-Me or Ti(CN)-Me with WC-Me, Mo₂C-Me, TaC-Me, NbC-Me, ZrC-Me and/or HfC-Me (Me is a binding phase, which is one or more selected from the group consisting of Ni, Co, Fe) according to the present invention are mixed in a predetermined amount, and are sintered so that the sinter having core of fine TiC or Ti(CN) is prepared.

The other method is that nano crystallite powder of TiC-Me or Ti(CN)-Me (Me is a binding phase, which is one or more selected from the group consisting of Ni, Co, Fe) and the cermet powder of complete solids-solution are mixed in a predetermined amount, and are sintered so that the hardness of the cermet can be reinforced.

As described above, said methods can be used with the method of forming the hard layer on a surface of the cermet or with the method of forming a high hard coating on a surface of the cermet.

Hereinafter, preferred embodiments of a method according to the present invention will be described in detail.

### [Example 1]

As an example, the anatase-TiO₂ of purity 99+%, NiO of purity 99% (avg. particle size of 45 *µ*m) and WO₃ of purity 99+% (avg. particle size of 20 *µ*m) were used.

They were mixed with carbon powder for the five target compositions as follows: (i) (Ti,W)C-Ni (containing 15wt% of WC), (ii) (Ti,W)C-Ni (containing 30wt% of WC), (iii) (Ti,W)(C,N)-Ni (containing 15wt% of WC and C/N = 2:1), (iv) (Ti,W)(C,N)-Ni (containing 30wt% of WC and C/N=3:1), and (v) (Ti,W)C (containing 15wt% of WC), (vi) (Ti,W)C (varying the amount of WC), whereby the cermet compositions fall outside of the invention as claimed. They were ground, i.e. high-energy ball milled using a planetary mill (Fritsch Pulverisette 7). Tungsten carbide (WC) balls with 5mm in a diameter were used as milling media and mixed with powders at a ball-to-powder weight ratio of 20:1.

A tungsten carbide bowl was used and all milling was conducted at a speed of 250 RPM in air for 20 hours.

To this end, the ground nano powders were annealed at 1300°C for one and half hours under a vacuum or hydrogen atmosphere to be reduced, and carburized. Herein, in case of carbo-nitride, nitrogen was injected into a vacuum furnace to be nitrided.

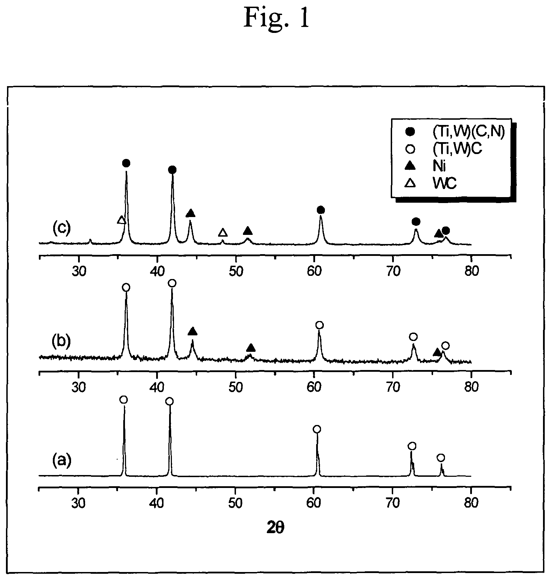

FIG. 1 shows a result of XRD phase analysis of nano powders prepared by one example of the present invention.

In the drawings, FIG. 1a shows that a complete **ceramic** powders of (Ti,W)C (containing 15wt% of WC) have been prepared from a mixture of TiO₂, WO₃ and C, FIG. 1b shows that cermet powders having a complete solid-solution phase of (Ti,W)C-Ni (containing 30wt% of WC) have been prepared from a mixture of TiO₂, WO₃, NiO and C, and FIG. 1c shows that cermet powders having a complete solid-solution phase of (Ti,W)(C,N)-Ni (containing 30wt% of WC) have been prepared from a mixture of TiO₂, WO₃, NiO and C.

As shown in FIG. 1a, the solid-solution phase formed is a single phase, which cannot be formed in the prior art. FIGs. 1b and 1c also show that Ni nano powders have been existed in a shape of being mixed with a single solid-solution phase.

It is proved that a homogeneous microstructure has been attained through using nano sized Ni and nano sized carbide or carbo-nitride. Also, from the above method, a cermet can be attained by a direct sintering without an additional mixing process in a preparing process of the cermet.

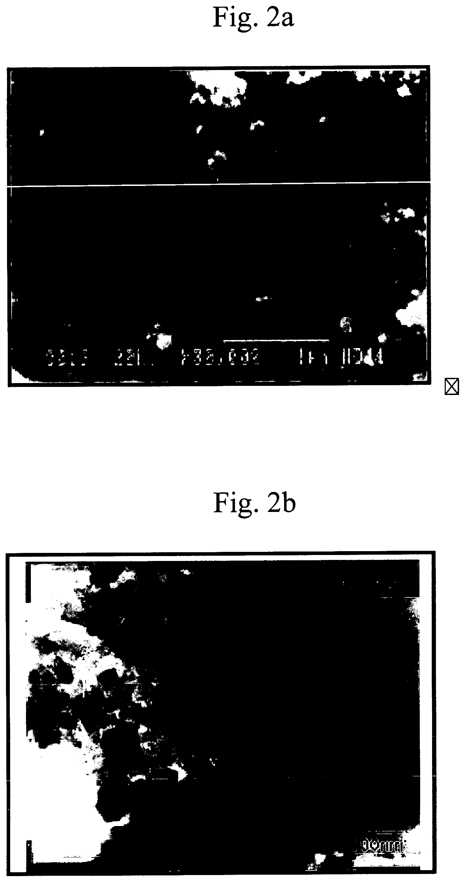

FIG. 2a is a photograph of SEM showing (Ti,W)C-Ni powders (containing 15wt% of WC) prepared by one example, and FIG. 2b is a photograph of TEM showing (Ti,W)C-Ni powders (containing 15wt% of WC) prepared by one example. It is proved that, from FIG. 2a, the powders have been formed into a homogeneous agglomerates of approximately 200nm in a given scale, and from FIG. 2b, the powders have been formed into a small mixed agglomerates having a size smaller than approximately 100nm in a given scale.

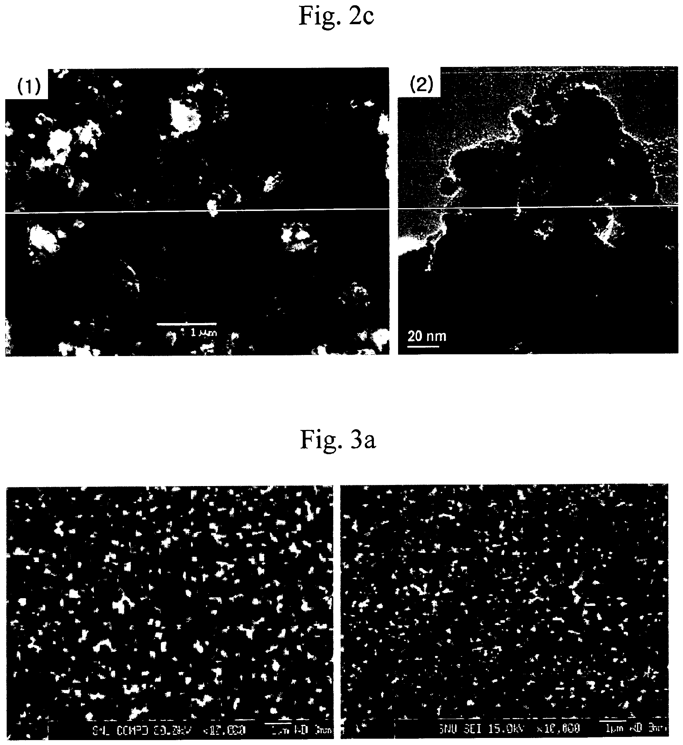

FIG. 2c is a photograph of SEM(1) and TEM(2) showing (Ti,W)C powders (containing 45wt% of WC) prepared by one example of the present invention.

The SEM photograph of FIG. 2c shows that the powders formed a homogeneous agglormerate of 100nm∼1*µ*m under the given scale. The TEM photograph of FIG. 2c shows that the powders formed a small agglormerate of carbide of 20∼50nm under the given scale.

This phenomenon of agglomerating is generally found in the nano powders, the formation of agglomerates contributes to a sintering besides an excessive agglomerating.

Table 1 is an analysis result of CNO element of the powders prepared on the basis of above compositions by the above process. As a comparison example, an analysis for commercial powders with the same composition was conducted.

**Table 1-1**

| Compositions | | C | N | O |
|---|---|---|---|---|
| 15 wt.% WC* | **Nano (Ti,W)C-Ni*** | **12.14** | **0.52** | **1.14** |
| | *COMMERCIAL TiC-WC-Ni* | *14.19* | *0.00* | *0.99* |
| 30 wt.% WC** | **Nano (Ti,W)C-Ni**** | **10.65** | **0.38** | **1.08** |
| | *COMMERCIAL TiC-WC-Ni* | *12.15* | *0.00* | *0.83* |
| 15 wt.% WC* | **Nano (Ti,W)C-Ni*** | **11.45** | **5.58** | **0.38** |
| | *COMMERCIAL TiC-WC-Ni* | *10.10* | 4.44 | *0.81* |
| 30 wt.% WC** | **Nano (Ti,W)C-Ni**** | **10.39** | **3.66** | **0.08** |
| | *COMMERCIAL TiC-WC-Ni* | *9.00* | *3.39* | *0.83* |

| | | | | |
|---|---|---|---|---|
| * The composition was made from Ti(CN)-15 wt.% WC-Ni as a starting composition. ** The composition was made from Ti(CN)-30 wt.% WC-Ni as a starting composition. | | | | |

**Table 1-2**

| Compositions | C | N | O |
|---|---|---|---|
| 45 wt.% WC [(Ti,W)C] | 11.566 | 0.258 | 0.058 |
| 58 wt.% WC [(Ti,W)C] | 10.658 | 0.222 | 0.086 |
| 69 wt.% WC [(Ti,W)C] | 9.003 | 0.072 | 0.02 |
| 77 wt.% WC [(Ti,W)C] | 8.508 | 0.003 | 0.022 |

As shown in Table 1-1, nano powders prepared is cermet powders of (Ti,W)C-Ni and (Ti,W)(C,N)-Ni with 15 and 30wt% WC, and particularly, in case of (Ti,W)(C,N)-Ni, the oxygen content is lower than that of commercial powders.

As shown in Table 1-2, in the case of **ceramic** powder of (Ti,W)C without Ni, the more the amount of WC, the less the amount oxygen.

Table 2 shows cermet powders having several possible compositions.

**Table 2**

| Composition of two phase Solid-solution (wt%) | Composition of three phase Solid-solution (wt%) | Composition of four phase Solid-solution (wt%) |
|---|---|---|
| | (Ti, 15W, 5Mo)(CN)-20Ni | |
| (Ti, 5Nb)C-20Ni | (Ti, 15W, 10Mo)(CN)-20Ni | |
| (Ti, 10Mo)C-20Ni | (Ti, 5W, 30Mo)(CN)-20Ni | (Ti, 15W, 3Mo, 1Nb)(CN)-20Ni |
| (Ti, 20Mo)C-20Ni | (Ti, 10W, 20Mo)(CN)-20Ni | (Ti, 15W, 5Mo, 3Nb)(CN)-15Co |
| (Ti, 30Mo)C-20Ni | (Ti, 10Mo, 5Nb)(CN)-20Ni | (Ti, 15W, 10Mo, 5Nb)(CN)-20Ni |
| (Ti, 40Mo)C-20Ni | (Ti, 10Mo, 5Nb)(CN)-15Co | (Ti, 15W, 10Mo, 5Nb)(CN)-7.5Co-7.5Ni |
| (Ti, 15Mo)(CN)-20Ni | (Ti, 10Mo, 5Nb)(CN)-7.5Co-7.5Ni | |
| (Ti, 15W)C-20Ni | (Ti, 10Mo, 10Nb)(CN)-20Ni | (Ti, 15W, 3Mo, 1Ta)(CN)-20Ni |
| (Ti, 15W)(CN)-20Ni | (Ti, 15Mo, 5Nb)(CN)-20Ni | (Ti, 15W, 5Mo, 3Ta)(CN)-20Ni |
| (Ti, 30W)C-20Ni | (Ti, 20Mo, 5Nb)(CH)-20Ni | (Ti, 15W, 5Mo, 3Ta)(CN)-15Co |
| (Ti, 30W)(CN)-20Ni | (Ti, 20Mo, 10Nb)(CN)-20Ni | |
| | (Ti, 30Mo, 5Nb)(CN)-20Ni | |

The powders having the former compositions prepared by the above method of the present invention were sintered at a normal sintering temperature of 1510 °C for one hour under a vacuum atmosphere of 10⁻² Torr.

FIG. 3a shows photographs of a microstructure of the sintered specimens having the compositions (i) and (ii), in which the left photograph indicates a case of composition (i), and the right photograph indicates a case of composition (ii).

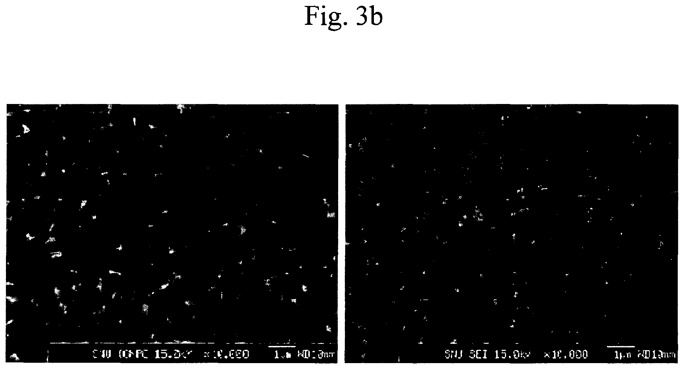

FIG. 3b shows photographs of a microstructure of the sintered specimens having the compositions (iii) and (iv), in which the left photograph indicates a case of composition (iii), and the right photograph indicates a case of composition (iv).

As shown in FIG. 3a, when sintered using (Ti,W)C-Ni cermet powders, a size of crystallite was of less than 100nm, and as shown in FIG. 3b, in case of (Ti,W)(C,N)-Ni cermet powders, a microstructure was of a size of less than 1 *µ*m.

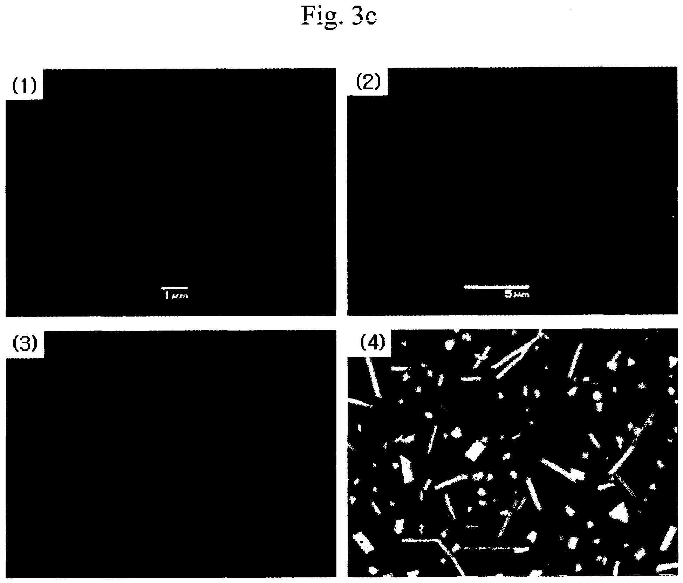

FIG. 3c shows photographs of a microstructure of the sintered (Ti,W)C ceramics (1510°C and one hour) having the compositions equivalent to (1) TiC-45wt%WC, reduced and carburized at 1120°C for 1 hours; (2) TiC-77wt%WC, reduced and carburized at 1120°C for 1 hours; (3) TiC-58wt%WC, reduced and carburized at 1200°C for 1 hours; (4) TiC-77wt%WC, reduced and carburized at 1200°C for 1 hours.

As shown in FIG. 3c, when sintering with the **ceramic** powders of (Ti,W)C, it was difficult to find WC in case of (1) and (3). On the other hand, shown was the microstructure wherein 3∼5 *µ*m of WC (white phase) is present with the dark and light gray phase of (Ti,W)C.

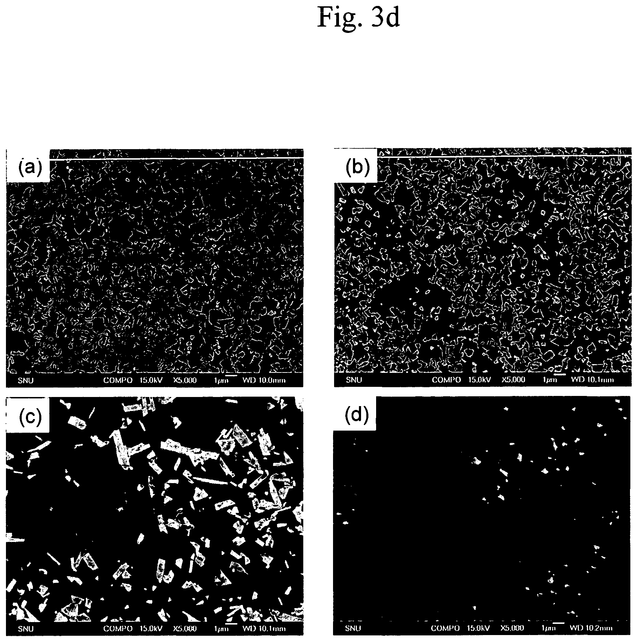

FIG. 3d shows SEM/BSE images of cermets equivalent to the composition of TiC-xWC-10Co (in wt%); (a) x=85, (b) x=80, (c) x=70, (d) x=60, sintered at 1450°C for 1hour after carbothermal reduction at 1200°C for 1 hours: White and black phases are WC and Co, respectively while the phases in dark and light gray are (Ti,W)C.

As shown in FIG. 3d, according to the amount of WC, WC becomes to coexist with (Ti,W)C in the microstructure.

Table 3 shows properties of cermets in Fig. 3d equivalent to the composition of TiC-xWC-10Co (in wt.%); (a) x=85, (b) x=80, (c) x=70 and (d) x=60. The cermets were sintered at 1450°C for 1hour after carbothermal reduction at 1200°C for 1hours.

**Table 3**

| WC content (wt%) | Relative density (%) | Hardness (GPa) | Toughness (MPam^{1/2}) |
|---|---|---|---|
| 85 | 95 | 13.5 | 10.5 |
| 80 | 98 | 15.3 | 11.7 |
| 70 | 99 | 15.0 | 11.9 |
| 60 | 100 | 15.4 | 9.5 |
| WC-10Co (ref.) | >98 | 13-14 | 11-12 |

As a result, it can be proved that a structure of a complete solid-solution phase is formed without being observed a core/rim structure in comparison with the conventional system of Ti(C,N)-M1C-M2C-···-Ni/Co and so on.

Table 4 shows mechanical properties of the cermet prepared by an example of the present description. For comparison, an evaluation was conducted for a cermet fabricated by micron sized commercial powders with the same composition.

**Table 4-1**

| Sintering condition | Composition | | Compact density | | Sintering density | | Mechanical Charicteristic | | Porosity |
|---|---|---|---|---|---|---|---|---|---|
| | | | (g/cm³) | (%) | (g/cm³) | (%) | H_{V} (GPa) | K_{IC} (MPam^{1/2}) | |
| 1510°C 1hour | (Ti,W)C-Ni | 15 wt.% WC | 3.97 | 63.6 | 6.13 | 100 | 12.3 | 13.2 | A2B1 |
| | | 30 wt.% WC | 4.55 | 63.9 | 7.05 | 100 | 11.1 | 13.8 | A2B2 |
| | (Ti, W)(C,N)-Ni | 15 wt.% WC | 3.58 | 57.3 | 6.16 | 98.8 | 12.2 | 12.8 | A3B1 |
| | | 30 wt.% WC | 4.48 | 62.8 | 7.03 | 98.5 | 11.2 | 12.6 | A2B3 |
| 1400°C 1hour | (Ti, W)C-Ni | 15 wt.% WC | 3.97 | 63.6 | 6.23 | 100 | 12.3 | 10.9 | A1B2 |
| | | 30 wt.% WC | 4.55 | 63.8 | 7.08 | 100 | 11.2 | 11.7 | A1B2 |
| | (Ti, W)(C,N)-Ni | 15 wt.% WC | 3.60 | 57.7 | 6.22 | 99.7 | 12.6 | 8.4 | A2B1 |
| | | 30 wt.% WC | 4.49 | 62.9 | 7.01 | 98.1 | 11.5 | 11.5 | A2B2 |

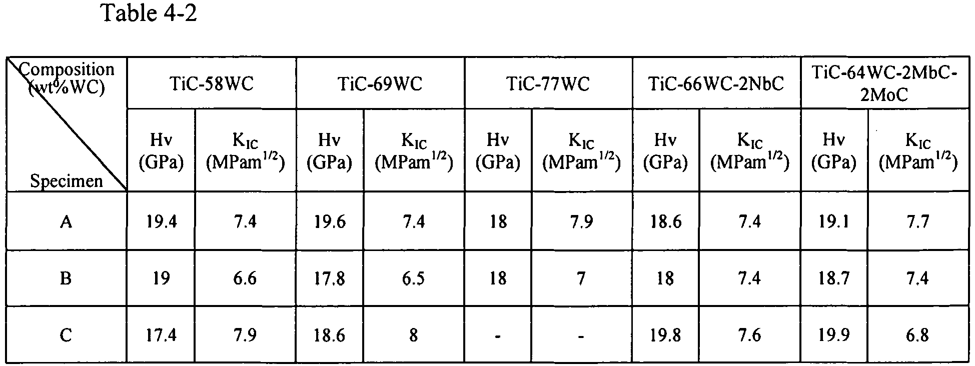

As shown in Table 4-1, it could be seen that the cermet prepared had a high sintering density and a low porosity even in case of the simple composition of the cermet. Furthermore, a value of K_{IC} in the cermet was of a high toughness of 11∼14 MPam^{1/2} while that of the comparison example was of a toughness of 6∼8 MPam^{1/2}. From this, it can be estimated that the cermet may become to be widely utilized comparing with that of the prior art. A high sintering density, a low porosity, a high toughness and a high hardness are also shown in the ceramic, as Table 4-2 shows.

### [Example 2]

As an example, a simple target composition has been firstly selected, and to this end, TiO₂, WO₃, NiO nano oxides having a 100nm crystallite size according to the respective contents has been prepared.

As a target composition, two compositions were selected as follows: (i) (Ti,W)C-Ni (containing 15wt% of WC) and (ii) (Ti,W)C-Ni (containing 30wt% of WC), whereby the cermet powders fall outside of the scope of the invention as claimed. Carbon powders and above nano oxides prepared were mixed and ground, and the ground nano powders were annealed at 1300°C for two hours under a vacuum or hydrogen, CH₄, CO/CO₂ atmosphere to be reduced, and carburized.

During sintering of the cermet powders prepared, 1∼100 torr of nitrogen is introduced to the furnace at the sintering temperature, and the pressure (1-100 torr) is made to be kept to a cooling process.

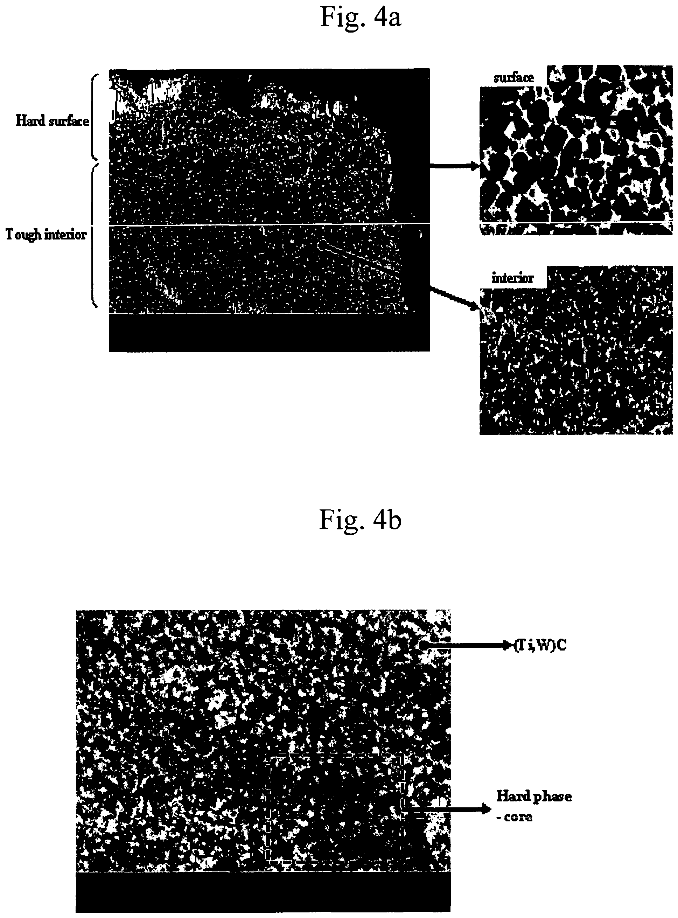

FIG. 4a are photographs of FE-SEM showing the sintered specimen (1510°C and one hour) of (Ti,W)C-Ni cermet powder (containing 15wt% of WC) in nitrogen atmosphere.

As FIG. 4a shows, a microstructure of the sintered specimen having two different complete solid-solution phases of (Ti,W)C-Ni at the surface and interior of the specimen. (Ti,W)C-Ni specimen (containing 15 wt% of WC) have been prepared from a mixture of TiO₂, WO₃, NiO and C and were exposed to nitrogen (-100 torr) atmosphere during sintering (1510°C and one hour) until cooling process.

SEM/EDS analysis for the compositions of solid-solution phases on the surface and in the interior of the sintered cermet in nitrogen atmosphere is shown in Table 5.

**Table 5**

| | interior | surface |
|---|---|---|
| Ti | 89.49 | 92.44 |
| W | 10.51 | 7.56 |
| Total | 100 at.% | 100 at.% |

As shown in Table 5, the solid-solution phases formed are different in the compositions. The solid-solution phase near the surface has higher amount of Ti than interior, which enhance the hardness of the surface layer. It is known that the hardness of TiC/Ti(CN) based solid-solution increases with Ti amount in the solid-solutions. FIG. 4a shows the growth of the surface solid-solution along with an increase of the metal binders near the surface.

Meanwhile, FIG. 4b is a photograph of FE-SEM showing the surface of the sintered specimen (1200°C and one hour) of (Ti,W)C-Ni cermet powder (containing 30wt% of WC) in nitrogen atmosphere.

As FIG. 4b shows, a microstructure of surface of the sintered specimen show the generation of very hard phase of TiC [or Ti(CN)], which has black color.

Therefore, it is proved that a harder surface microstructure has been attained through using nitrogen atmosphere from before or during sintering. This condition can be extended to cooling process.

### [Example 3]

As an example, a simple target composition has been firstly selected, and to this end, TiO₂, WO₃, NiO nano oxides having a 100nm crystallite size according to the respective contents has been prepared.

As a target composition, four compositions were selected as follows: (i) (Ti,W)C-Ni (containing 15wt% of WC), (ii) (Ti,W)C-Ni (containing 30wt% of WC), (iii) (Ti,W)CN-Ni (containing 15wt% of WC) and (iv) (Ti,W)CN-Ni (containing 30wt% of WC), whereby the cermet powders fall outside of the scope of the invention as claimed. Carbon powders and above nano oxides prepared were mixed and ground, and the ground nano powders were annealed at 1300°C for two hours under a vacuum or hydrogen, CH₄, CO/CO₂ atmosphere to be reduced, and carburized. In case of carbo-nitride, nitrogen was injected into a vacuum furnace.

During sintering of the cermet powders prepared, vacuum atmosphere (or argon, nitrogen) is used. Further, coating layer of TiN is formed on the surface of the cermet sintered by using PVD method. The coating layer of TiN show characteristics of high hardness and wear-resistance, so that forming the coating layer of TiN on the surface of the cermet gives great improvement in the hardness of the cermet.

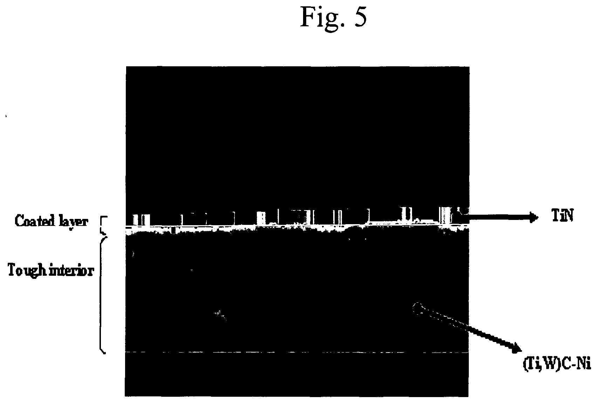

FIG.5 is a photograph of FE-SEM showing sinter (1510°C and one hour) of (Ti,W)C-Ni cermet powders (containing 15wt% of WC), the surface of which is coated with TiN hard coating layer by PVD.

As shown in the FIG. 5, the coating layer was formed on the surface of the cermet. The thickness of the layer was 1-1.5 micron.

The mechanical characteristics of respective sinters are shown in Table 6.

**Table 6**

| Condition | Composition | | Interior | | TiN coated layer | |
|---|---|---|---|---|---|---|
| | | | Hardness (Gpa) | Toughness (MPa·m^{1/2}) | Hardness (Gpa) | Toughness (MPa·m^{1/2}) |
| Nano 1510 °C 1h | (Ti,W)C-Ni | 15 WC | 12.3 | 13.2 | 14.3 | 8.8 |
| | | 30 WC | 11.1 | 13.8 | 14.1 | 8.8 |
| | (Ti,W)CN-Ni | 15 WC | 12.2 | 12.0 | 15.3 | 10.2 |
| | | 30 WC | 11.2 | 12.6 | 14.8 | 9.3 |

As shown in Table 6, although the coated layer has lower toughness than that of interior phase, the coated layer shows higher hardness than that of interior phase. Therefore, it came to our knowledge that the coated layer on the surface of the cermet gives high hardness to the cermet which has also high toughness wholly (interior + coated layer), thus providing the suitability of the cermet for cutting tools.

### [Example 4]

As an example, at first, nano powder of Ti(CN)-Ni, WC-Ni and MO₂C-Ni were selected as a target composition for mixing, and to this end, (TiO₂, NiO), (WO₃, NiO) and (MO₂, NiO) nano oxides having a 100nm crystallite size according to the respective contents has been prepared.

As described above, the following three compositions were selected: (i) Ti(CN)-Ni (containing 20wt% of Ni, C/N=7:3), (ii) WC-Ni (containing 20wt% of Ni) and (iii) MO₂C-Ni (containing 20wt% of Ni), whereby the cermet powders fall outside the scope of the invention as claimed. Carbon powders and above nano oxides prepared were mixed and ground, and the ground nano powders were annealed at 1300°C for two hours under a vacuum or hydrogen, CH₄, CO/CO₂ atmosphere to be reduced, and carburized. In case of carbo-nitride, nitrogen was injected into a vacuum furnace.

The three nano powders prepared in the above method was mixed for two target compositions as follows: (i) Ti(CN)-Ni + WC-Ni (containing 15wt% of WC-Ni) and (ii) Ti(CN)-Ni + MO₂C-Ni (containing 15wt% of MO₂C-Ni).

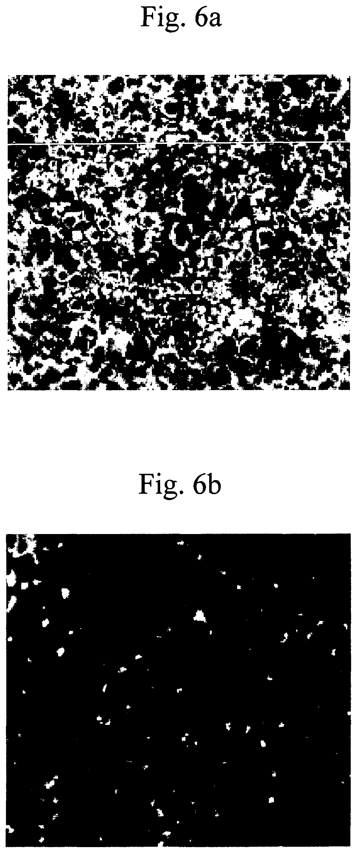

FIG. 6a is photograph of FE-SEM (bar scale : 5 *µ*m) showing sinter (1510°C and one hour) of cermet powders mixture of TiC-Ni and WC-Ni. FIG. 6b is photograph of FE-SEM (bar scale : 5 *µ*m) showing sinter (1510°C and one hour) of cermet powders mixture of Ti(CN)-Ni and MO₂C-Ni.

As FIGs. 6a and 6b shows, sinters of mixture of carbide and cabo-nitride especially containing Ni were obtained. According to this method, reinforcement of hardness and change of composition become to be easy.

### [Example 5]

As an example, for preparing cermet powder and Ti(CN)-Ni, (TiO₂, WO₃, NiO) and (TiO₂, NiO) nano oxides having a 100nm crystallite size according to the respective contents has been prepared.

As a target composition, two compositions were selected as follows: (i) (Ti,W)(CN)-Ni (containing 30wt% of WC, containing 20wt% of Ni) and (ii) Ti(CN)-Ni (containing 20wt% of Ni, C/N=7:3). Cermet powder of (Ti,W)(CN)-Ni prepared and powder of Ti(CN)-Ni, were mixed for a composition (30wt% Ti(CN)-Ni), and were sintered.

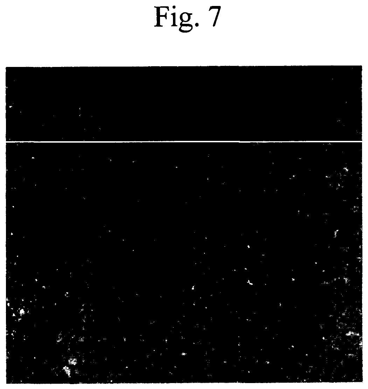

FIG. 7 is photograph of FE-SEM (bar scale : 5 *µ*m) showing sinter (1510°C and one hour) of cermet powders mixture of (Ti,W)(CN)-Ni and Ti(CN)-Ni (30wt% Ti(CN)-Ni).

As FIG. 7 shows, sinter of mixture of cermet powder and Ti(CN)-Ni were obtained. According to this method, reinforcement of hardness also becomes to be easy.

As described above, a **ceramic** powder, a method for preparing the **ceramic** powder, a ceramic using the **ceramic** powder, a method for preparing the ceramic, a cermet powder including the **ceramic** powder, a method for preparing the cermet powder, a cermet using the cermet powder and a method for preparing the cermet can resolve a problem that the cermet such as TiC or Ti(CN) based cermet of the prior art had a lower toughness due to its high hardness, and provide the further improvement of the hardness as well as the toughness, so that it can be properly used in cutting tools, die materials and so on substituting the conventional WC-Co.

From the foregoing, in a **ceramic** powder, a method for preparing the **ceramic** powder, and a method for preparing the ceramic, a cermet powder including the **ceramic** powder, a method for preparing the cermet powder, a cermet using the cermet powder and a method for preparing the cermet, a complete solid-solution phase is provided to a microstructure of the **ceramic** powder, especially TiC or Ti(CN) based **ceramic** powder, considerably and substantially increasing a toughness of the cermet material, having an advantage in that a direct sintering can be conducted without additional mixing processes, and providing an effect of fabricating high hardness and toughness cutting tools to substitute WC-Co super hard material due to its excellent general mechanical properties.

Although the preferred embodiments of the present invention have been described for illustrative purposes, those skilled in the art will appreciate that various modifications, additions and substitutions are possible, without departing from the scope of the invention as disclosed in the accompanying claims.

## Claims

1. A ceramic powder comprising a carbide or a carbo-nitride of Ti and at least one further element of metal selected from IV, V and VI Group metals of the periodic table, and having nano-sized crystallites of 100 nm or less and a homogenous microstructure consisting of a single complete solid-solution phase, wherein the amount of the further element besides Ti in the form of its carbide or carbo-nitride is 5∼90wt% relative to total weight of the powder.

2. The ceramic powder according to claim 1, wherein the further element of metal besides Ti is selected from IV and VI Group metals of the periodic table.

3. The ceramic powder according to claim 1, wherein the amount of W in the form of its carbide or carbo-nitride is 10∼90wt% relative to total weight of the powder.

4. The ceramic powder according to claim 1, wherein the amount of W in the form of its carbide or carbo-nitride is 10∼80wt% relative to total weight of the powder, and the amount of Mo, Nb and/or Ta in the form of its carbide or carbo-nitride is below 25wt% relative to total weight of the powder if added.

5. The ceramic powder according to claim 1, wherein the amount of W is 30∼90wt% relative to total weight of the powder, and the amount of Mo, Nb and/or Ta is below 10wt% relative to total weight of the powder if added.

6. A method for preparing a ceramic powder according to claim 1, comprising the steps of:
mixing nano-sized (100 nm or less) oxides, hydroxides, carbonates or hydrates of Ti and at least one further element of metal selected from IV, V and VI Group metals of the periodic table with carbon powder or carbon source material (S1-1); and
reducing and carburizing the mixture for 3 hours or less in the temperature range from 1000°C or more and less than 1300°C (S2).

7. The method according to claim 6, the step (S1-1) further comprises grinding the mixture.

8. A method for preparing a ceramic powder according to claim 1, comprising the steps of:
mixing oxides, hydroxides, carbonates or hydrates having micron size of Ti and at least one further element of metal selected from IV, V and VI Group metals of the periodic table with carbon powders or carbon source material, and grinding the mixture to nano size (100 nm or less) or amorphous state (S1-2); and
reducing and carburizing the mixture for 3 hours or less in the temperature range from 1000°C or more and less than 1300°C (S2).

9. A method for preparing a ceramic, comprising the step of sintering the ceramic powder according to claim 1.

10. The method according to claim 9, wherein the method further comprises the process of forming one or more reinforced coating layers of TiC-Me, Ti(CN)-Me, (Ti, M1, M2..)C-Me or (Ti, M1, M2..)(CN)-Me, wherein Me is a binding phase, which is one or more selected from the group consisting of Ni, Co, Fe, on the surface of the ceramic, the reinforced coating layers being formed with CVD or PVD method after sintering the ceramic powder.

11. A ceramic powder comprising a carbide or a carbo-nitride of Ti and W and a metal selected from Mo, Nb and/or Ta, and having nano-sized crystallites of 100nm or less and a homogeneous microstructure consisting of a single complete solid-solution phase.

12. A ceramic powder, according to claim 1, comprising a carbide or a carbo-nitride of Ti and W, and having nano-sized crystallites of 100nm or less and a homogeneous microstructure consisting of a single complete solid-solution phase, wherein the amount of W in the form of its carbide or carbo-nitride is 10∼90wt% relative to total weight of the powder.

## Patentansprüche

1. Keramikpulver, umfassend ein Karbid oder ein Carbonitrid von Ti, und wenigstens ein weiteres Metallelement, das ausgewählt ist aus Metallen des Periodensystems der Gruppe IV, V und VI, und das Kristallite der Nanogröße von 100 nm oder weniger und eine homogene Mikrostruktur aufweist, die aus einer einzigen, vollständigen Mischkristallphase besteht, wobei die Menge des zusätzlich zu Ti weiteren Elements in der Form seines Karbids oder Carbonitrids 5∼90 Gew.-% relativ des Gesamtgewichts des Pulvers beträgt.

2. Keramikpulver nach Anspruch 1, wobei das zusätzlich zu Ti weitere Metallelement ausgewählt ist aus Metallen des Periodensystems der Gruppe IV und VI.

3. Keramikpulver nach Anspruch 1, wobei die Menge von W in der Form seines Karbids oder Carbonitrids 10∼90 Gew.-% relativ des Gesamtgewichts des Pulvers beträgt.

4. Keramikpulver nach Anspruch 1, wobei die Menge von W in der Form seines Karbids oder Carbonitrids 10∼80 Gew.-% relativ des Gesamtgewichts des Pulvers beträgt, und die Menge von Mo, Nb und/oder Ta in der Form ihres Karbids oder Carbonitrids unter 25 Gew.-% relativ des Gesamtgewichts des Pulvers beträgt, falls zugesetzt.

5. Keramikpulver nach Anspruch 1, wobei die Menge von W 30∼90 Gew.-% relativ des Gesamtgewichts des Pulvers beträgt, und die Menge von Mo, Nb und/oder Ta unter 10 Gew.-% relativ des Gesamtgewichts des Pulvers beträgt, falls zugesetzt.

6. Verfahren zur Herstellung eines Keramikpulvers nach Anspruch 1, umfassend die folgenden Schritte:
Mischen von Oxiden, Hydroxiden, Carbonaten oder Hydraten von Ti in Nanogröße (100 nm oder weniger) und wenigstens eines weiteren Metallelements, das ausgewählt ist aus Metallen des Periodensystems der Gruppe IV, V und VI, mit Kohlenstoffpulver oder Kohlenstoffausgangsmaterial (S1-1); und
Reduzieren und Karbonisieren der Mischung für 3 Stunden oder weniger im Temperaturbereich von 1000 °C oder mehr und weniger als 1300 °C (S2).

7. Verfahren nach Anspruch 6, wobei der Schritt (S1-1) ferner das Zermahlen der Mischung umfasst.

8. Verfahren zur Herstellung eines Keramikpulvers nach Anspruch 1, umfassend die folgenden Schritte:
Mischen von Oxiden, Hydroxiden, Carbonaten oder Hydraten mit einer Mikrongröße von Ti, und wenigstens eines weiteren Metallelements, das ausgewählt ist aus Metallen des Periodensystems der Gruppe IV, V und VI, mit Kohlenstoffpulvern oder Kohlenstoffausgangsmaterial, und Zermalen der Mischung auf Nanogröße (100 nm oder weniger) oder den amorphen Zustand (S1-2); und
Reduzieren und Karbonisieren der Mischung für 3 Stunden oder weniger im Temperaturbereich von 1000 °C oder mehr und weniger als 1300 °C (S2).

9. Verfahren zur Herstellung einer Keramik, umfassend den Schritt des Sinterns des Keramikpulvers nach Anspruch 1.

10. Verfahren nach Anspruch 9, wobei das Verfahren ferner den Prozess des Formens einer oder mehrerer verstärkter Beschichtungsschichten von TiC-Me, Ti(CN)-Me, (Ti, M1, M2..)C-Me oder (Ti, M1, M2..)(CN)-Me umfasst, wobei Me eine Bindungsphase ist, die an der Oberfläche der Keramik ein oder mehrere von der Gruppe bestehend aus Ni, Co, Fe ist, wobei die verstärkten Beschichtungsschichten mit einem CVD- oder PVD-Verfahren nach dem Sintern des Keramikpulvers geformt sind.

11. Keramikpulver, umfassend ein Karbid oder ein Carbonitrid von Ti und W und ein Metall, das ausgewählt ist aus Mo, Nb und/oder Ta, und das Kristallite mit einer Nanogröße von 100 nm oder weniger und eine homogene Mikrostruktur aufweist, die aus einer einzigen, vollständigen Mischkristallphase besteht.

12. Keramikpulver nach Anspruch 1, umfassend ein Karbid oder ein Carbonitrid von Ti und W, und das Kristallite mit einer Nanogröße von 100 nm oder weniger und eine homogene Mikrostruktur aufweist, die aus einer einzigen, vollständigen Mischkristallphase besteht, wobei die Menge von W in der Form seines Karbids oder Carbonitrids 10∼90 Gew.-% relativ des Gesamtgewichts des Pulvers beträgt.

## Revendications

1. Poudre de céramique comprenant un carbure ou un carbonitrure de Ti et au moins un élément de métal supplémentaire choisi, parmi les métaux des groupes IV, V et VI du tableau périodique, et ayant des cristallites de taille nanométrique de 100 nm ou moins et une microstructure homogène constituée d'une unique phase de solution solide complète, dans laquelle la quantité de l'élément supplémentaire en plus de Ti sous la forme de son carbure ou carbonitrure est de 5 à 90 % en poids par rapport au poids total de la poudre.

2. Poudre de céramique selon la revendication 1, dans laquelle l'élément de métal supplémentaire en plus de Ti est choisi parmi les métaux des groupes IV et VI du tableau périodique.

3. Poudre de céramique selon la revendication 1, dans laquelle la quantité de W sous la forme de son carbure ou carbonitrure est de 10 à 90 % en poids par rapport au poids total de la poudre.

4. Poudre de céramique selon la revendication 1, dans laquelle la quantité de W sous la forme de son carbure ou carbonitrure est de 10 à 80 % en poids par rapport au poids total de la poudre, et la quantité de Mo, Nb et/ou Ta sous la forme de leur carbure ou carbonitrure est inférieure à 25 % en poids par rapport au poids total de la poudre s'ils sont ajoutés.

5. Poudre de céramique selon la revendication 1, dans laquelle la quantité de W est de 30 à 90 % en poids par rapport au poids total de la poudre, et la quantité de Mo, Nb et/ou Ta est inférieure à 10 % en poids par rapport au poids total de la poudre s'ils sont ajoutés.

6. Procédé de préparation d'une poudre de céramique selon la revendication 1, comprenant les étapes suivantes :
le mélange d'oxydes, d'hydroxydes, de carbonates ou d'hydrates de Ti de taille nanométrique (100 nm ou moins) et d'au moins un élément de métal supplémentaire choisi parmi les métaux des groupes IV, V et VI du tableau périodique avec une poudre de carbone ou un matériau source de carbone (S1-1) ; et
la réduction et la carburation du mélange pendant 3 heures ou moins dans la plage de températures allant de 1000 °C ou plus à moins de 1300 °C (S2).

7. Procédé selon la revendication 6, l'étape (S1-1) comprend en outre le broyage du mélange.

8. Procédé de préparation d'une poudre de céramique selon la revendication 1, comprenant les étapes suivantes :
le mélange d'oxydes, d'hydroxydes, de carbonates ou d'hydrates ayant une taille micrométrique de Ti et d'au moins un élément de métal supplémentaire choisi parmi les métaux des groupes IV, V et VI du tableau périodique avec des poudres de carbone ou un matériau source de carbone, et le broyage du mélange jusqu'à une taille nanométrique (100 nm ou moins) ou un état amorphe (S1-2) ; et
la réduction et la carburation du mélange pendant 3 heures ou moins dans la plage de températures allant de 1000 °C ou plus à moins de 1300 °C (S2).

9. Procédé de préparation d'une céramique, comprenant l'étape de frittage de la poudre de céramique selon la revendication 1.

10. Procédé selon la revendication 9, dans lequel le procédé comprend en outre le procédé de formation d'une ou de plusieurs couches de revêtement renforcé de TiC-Me, Ti(CN)-Me, (Ti, M1, M2..)C-Me ou (Ti, M1, M2..) (CN)-Me, dans lequel Me est une phase de liaison, qui est un ou plusieurs sélectionnés dans le groupe constitué de Ni, Co, Fe, sur la surface de la céramique, les couches de revêtement renforcé étant formées avec un procédé CVD ou PVD après le frittage de la poudre de céramique.

11. Poudre de céramique comprenant un carbure ou un carbonitrure de Ti et W et un métal sélectionné parmi Mo, Nb et/ou Ta, et ayant des cristallites de taille nanométrique de 100 nm ou moins et une microstructure homogène constituée d'une unique phase de solution solide complète.

12. Poudre de céramique, selon la revendication 1, comprenant un carbure ou un carbonitrure de Ti et W, et ayant des cristallites de taille nanométrique de 100 nm ou moins et une microstructure homogène constituée d'une phase unique de solution solide complète, dans laquelle la quantité de W sous la forme de son carbure ou carbonitrure est de 10 à 90 % en poids par rapport au poids total de la poudre.
